# EUROPÄISCHE PATENTSCHRIFT

(11) **EP 2 789 867 B1**
(45) Veröffentlichungstag und Bekanntmachung des Hinweises auf die Patenterteilung: **19.02.2020**
(21) Anmeldenummer: 14164316.3
(22) Anmeldetag: 11.04.2014
(51) Int. Cl.: F16C 29/06, F16C 33/66

(54) **Kugelführungskanal einer kugelgelagerten Linearführung**
Ball guiding channel of a linear guide with ball bearings
Canal de guidage à billes d'un guidage linéaire à palier à billes

(30) Priorität: 11.04.2013 DE 102013206352
(43) Veröffentlichungstag der Anmeldung: 15.10.2014
(73) Patentinhaber: Aktiebolaget SKF, 415 50 Göteborg (SE)
(72) Erfinder: Jeschka, Erwin, 97711 Maßbach (DE); Gransow, Anita, 97526 Sennfeld (DE); Mayer, Uwe, 97702 Münnerstadtd (DE); Velde, Henryk, 97440 Werneck (DE)
(74) Vertreter: Heyerhoff Geiger & Partner Patentanwälte PartGmbB

(56) Entgegenhaltungen:
- EP-A1- 1 783 385
- DE-U1-202012 101 437
- FR-A- 1 299 462
- US-A- 5 221 145
- US-A- 5 755 516
- US-B1- 6 550 969

## Beschreibung

Ausführungsbeispiele der vorliegenden Erfindung betreffen Linearführungen und insbesondere Kugelkanäle von Führungswagen für derartige Linearführungen.

Unter einer Linearführung versteht man im Allgemeinen eine Anordnung, die eine möglichst reibungsfreie Translation einer oder mehrerer beweglicher Baugruppen einer Maschine ermöglicht und dabei gleichzeitig eine Einhaltung der Bewegungsrichtung in Form einer linearen Bahn garantiert. Man kann Linearführungen nach ihrer Lagerung grundsätzlich in Gleitführungen und Wälzführungen unterteilen. Wälzführungen beruhen auf dem Prinzip der Umwälzung von Wälzkörpern zwischen zwei relativ zueinander bewegten Führungselementen. Als Wälzkörper können, wie beim Rotationswälzlager, beispielsweise Kugeln, Rollen, Nadeln oder andere Wälzkörper dienen. Zu den Wälzführungen gehören beispielsweise Profilschienenführungen oder Linearkugellager, welche auch als Kugelbuchsen bezeichnet werden können. Hierbei sind Linearführungen nicht auf ausschließlich lineare Bewegungen beschränkt. Sie ermöglichen vielmehr eine translatorische Bewegung im Vergleich zu rotatorischen Bewegungen, die durch entsprechende Rotationswälzlager geführt werden. Gerade im Bereich der Linearlager werden die Begriffe "linear" und "translatorisch" daher häufig synonym verwendet.

Mit Hilfe von Linearführungen lassen sich präzise Translationsbewegungen in vielfältigen Anwendungssituationen realisieren. Eine Linearführung weist im Allgemeinen eine Führungsschiene, wie z. B. eine Welle oder eine Profilschiene, und einen Linear- bzw. Führungswagen auf, der, gemäß manchen Ausführungsformen, insbesondere bei Linearkugellagern, auch als Buchse ausgebildet sein kann, und welcher linear beweglich auf der Führungsschiene angeordnet ist. Insbesondere in Anwendungssituationen, bei denen eine Amplitude der Linearbewegung in einer Größenordnung der Außenabmessungen des Führungswagens parallel zur Bewegungsrichtung liegt oder diese sogar übersteigt, werden häufig so genannte Kugelumlaufführungen eingesetzt. Eine Kugelumlaufführung zeichnet sich dadurch aus, dass der Führungswagen mittels Kugeln relativ zur Führungsschiene beweglich gelagert ist und dass die Kugeln auf einer geschlossenen, also quasi endlosen, Bahn umlaufen. Eine Kugelumlaufführung ermöglicht somit eine beliebige lineare Beweglichkeit des Führungswagens relativ zur Führungsschiene, die nur durch die Abmessungen der Führungsschiene und gegebenenfalls durch eine Einbauumgebung begrenzt wird.

Bei den so genannten Profilschienenführungen umgreift der Führungswagen, der in diesem Zusammenhang auch als Laufwagen bezeichnet werden kann, mit einem im Wesentlichen U-förmigen Querschnitt eine profilierte Führungs- bzw. Profilschiene. Der Führungswagen ist dabei auf der Führungsschiene wälzgelagert. In anderen Worten ausgedrückt bildet der Führungswagen einen äußeren Führungsteil der Linearführung und die Führungsschiene einen inneren Führungsteil der Profilschienenführung, wobei sich inneres und äußeres Führungsteil gegenseitig über Wälzkörper abstützen.

Bei den auch als Kugelbuchsen bezeichneten Linearkugellagern umgreift typischerweise ein als Buchse ausgebildeter Führungswagen oder Käfig, mit einem im Wesentlichen zylindrischen Querschnitt eine als Führungsschiene wirkende, insbesondere runde, Welle, weshalb diese spezielle Form der Linearführung auch als Wellenführung bezeichnet werden kann. Dabei ist die Buchse auf der Welle wälzgelagert, sodass sie einen äußeren Führungsteil des Linearkugellagers bildet, während die Welle einen inneren Führungsteil des Linearkugellagers bildet.

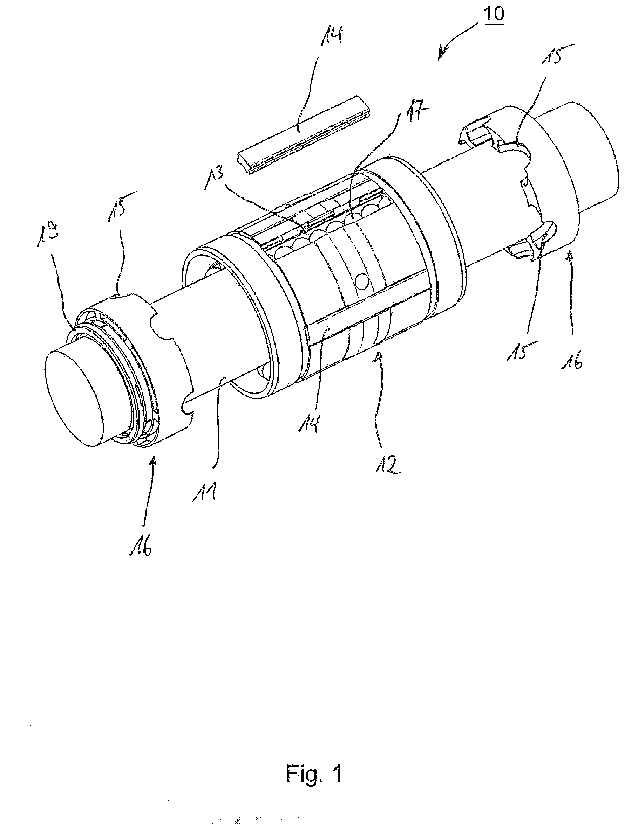

Die Fig. 1 zeigt zur Veranschaulichung eine perspektivische Darstellung einer als Linearkugellager 10 ausgebildeten herkömmlichen Linearführung.

Die herkömmliche Linearführung 10 umfasst eine Welle 11 als inneres Führungsteil, sowie eine die Welle 11 zylindrisch umgebende Buchse 12, die im Nachfolgenden auch als Käfig bezeichnet wird. Die Buchse bzw. der Käfig 12 umfasst wiederum eine Mehrzahl von endlosen Wälzkörperumläufen 13. Ein endloser Kugelumlauf 13 wird durch einen Kugelkanal gebildet, welcher in einen Vorlauf- bzw. Last-/Tragkanal und einen Rücklaufkanal unterteilt werden kann. Im Vorlaufkanal oder auch Tragkanal befindet sich jeweils eine momentan tragende Kugelreihe, d. h. diejenigen Kugeln 17, welche die Buchse 12 gegenüber der Welle 11 abstützen. Die in dem Vorlaufkanal befindlichen Kugeln 17 rollen dabei zwischen einer durch die Wellenoberfläche gebildeten Laufbahn und einer seitens der Buchse 12 befindlichen Gegenlaufbahn 14 ab. Über Umlenkbereiche 15, welche in der gemäß Fig. 1 dargestellten Lageranordnung 10 in Schlussringen 16 untergebracht sind, können die Kugeln 17 aus dem Vorlaufkanal in einen entsprechenden lastfreien Rücklaufkanal umgelenkt werden, und umgekehrt. Dadurch entsteht ein endloser Kugelumlauf in dem Kugelführungskanal 13. Die Lageranordnung 10 kann über an den Schlussringen 16 befindliche Dichtungen 19 gegenüber einer äußeren Umgebung abgedichtet werden. In den Umlenkteilen bzw. Schlussringen 16 können sich zur Schmierung der Wälzkörper 17 Schmiermitteldepots befinden.

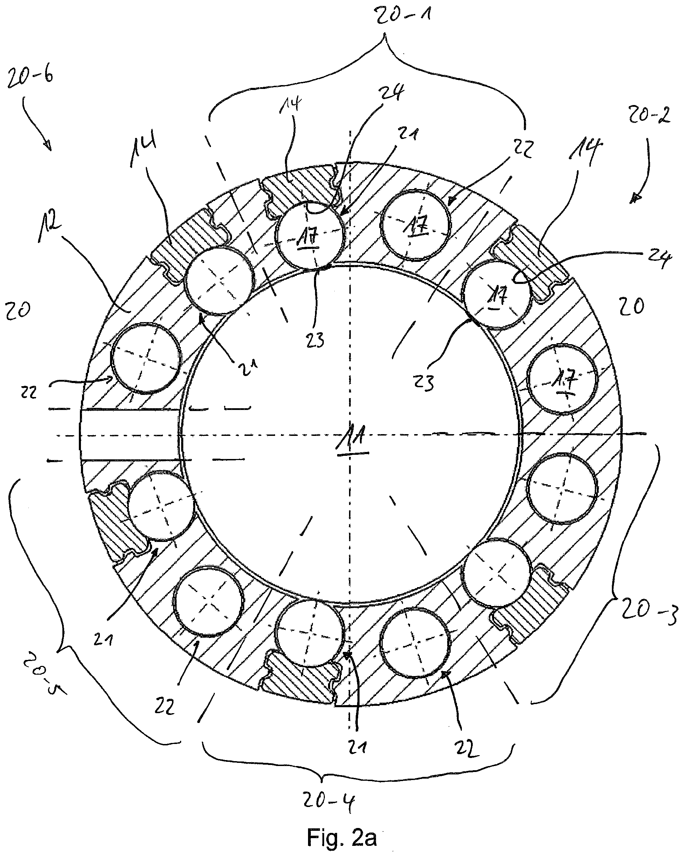

Die Fig. 2a zeigt die Linearführungsanordnung 10 der Fig. 1 in einer Querschnittsdarstellung.

In der Querschnittsdarstellung der Fig. 2a lassen sich insgesamt sechs Kugelführungskanäle 20-1 bis 20-6 erkennen, die wiederum in Vorlauf- bzw. Tragkanäle 21 und Rücklaufkanäle 22 unterteilt werden können. In den Vorlauf- bzw. Tragkanälen 21 rollen die Wälzkörper bzw. Kugeln 17 zwischen Laufbahnen 23, die durch die Wellenoberfläche der Welle 11 gebildet werden, und Gegenlaufbahnen 24 ab. Die Gegenlaufbahnen 24 werden durch in die Buchse bzw. den Käfig 12 eingepasste Gegenlaufbahnstücke 14 gebildet, welche beispielsweise aus gehärtetem Stahl gefertigt sein können. Die in dem Vorlaufkanal 21 geführten Wälzkörper 17 werden vermittels der anhand der Fig. 1 beschriebenen Umlenkbereiche 15 in einen entsprechenden Rücklaufkanal 22 umgelenkt, indem sie unbelastet zurückgeführt werden, um danach wiederum in den Vorlaufkanal 21 einzutreten.

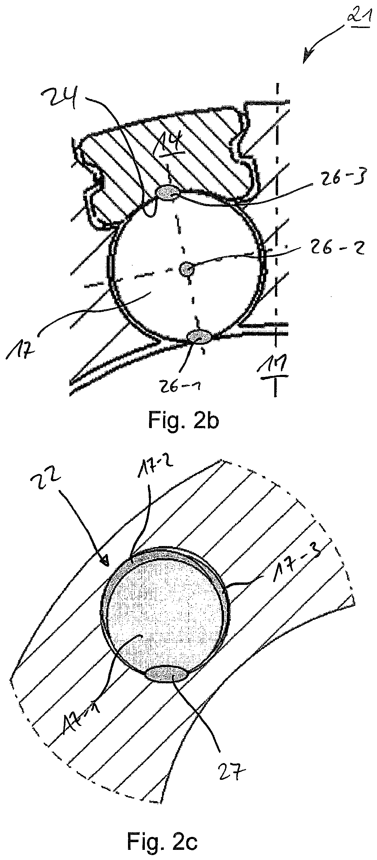

Gemäß der in den Fig. 1 und 2 dargestellten Linearführungsanordnung 10 sind die Kugelführungskanäle 20-1 bis 20-6, umfassend die Kugelvorlauf- und Kugelrücklaufkanäle 21, 22, in ihrem Querschnitt senkrecht zur Wellenachse jeweils rund ausgebildet. In anderen Worten ausgedrückt weisen die Kugelführungskanäle 21, 22 jeweils eine Zylinderform auf.

Die Fig. 2b zeigt eine vergrößerte Darstellung eines Kugelvorlaufkanals 21, in welchem eine Kugel 17 zwischen der Welle 11 und der durch das Gegenlaufbahnstück 14 gebildeten Gegenlaufbahn 24 definiert abrollt. Es gibt drei definierte Kontaktpunkte 26-1, 26-2 und 26-3 zwischen der Kugel 17 und der Welle 11 (Kontaktpunkt 26-1), der Kugel 17 und einer benachbarten Kugel (Kontaktpunkt 26-2), sowie der Kugel 17 und der Gegenlaufbahn 24 (Kontaktpunkt 26-3).

Während also bei dem herkömmlichen runden Querschnitt der Kugelführungskanäle 21, 22 eine Position der Kugeln 17 im Vorlaufkanal 21 durch die Welle 11 bzw. die Laufbahn 23 und die Gegenlaufbahn 24 zwar definiert ist, ist die Position einer Kugel 17 im Rücklaufkanal 22 beim herkömmlichen runden Kugelführungskanalquerschnitt nicht eindeutig definiert, was in der vergrößerten Darstellung der Fig. 2c veranschaulicht wird.

Die Fig. 2c zeigt dazu drei benachbarte Kugeln 17-1, 17-2 und 17-3 in einem rund ausgebildeten Rücklaufkanal 22. In dieser Darstellung wird deutlich, dass es im dem Rücklaufkanal 22 keinen (vor-)definierten Kontaktpunkt zwischen den Kugeln 17 und der Mantelfläche des Rücklaufkanals 22 gibt. Lediglich exemplarisch ist ein Kontaktpunkt 27 zwischen der ersten Kugel 17-1 und der Mantelfläche des Rücklaufkanals 22 eingezeichnet. Die hinter der ersten Kugel 17-1 angeordneten weiteren Kugeln 17-2 und 17-3 weisen demgegenüber jeweils andere Kontaktpunkte bzw. -linien auf der Mantelfläche bzw. der Käfigwand auf.

Die herkömmliche runde Kugelführungskanalgeometrie, die oben erläutert wurde, weist eine Reihe von Nachteilen auf. Bei einem zu engen Durchmesser bzw. Querschnitt der Kugelführungskanäle 21, 22 besteht die Gefahr einer Reibungserhöhung zwischen einer Kugel 17 und der Käfigwand aufgrund enger Schmiegungen. Wählt man demgegenüber einen zu weiten Querschnitt bzw. Durchmesser der Kugelführungskanäle 21 und insbesondere 22, kann dies zu erhöhten und unangenehmen Geräuschentwicklungen führen. Aufgrund der anhand der Fig. 2c erläuterten undefinierten Positionen der Kugeln im Rücklaufkanal 22 kann es zu einer Reibungserhöhung zwischen benachbarten Kugeln kommen.

Ein weiteres Problem durch einen herkömmlichen runden Kanalquerschnitt kann während der Fertigung der Buchse bzw. des Käfigs 12 entstehen. Der Käfig 12 wird typischerweise mittels eines Spritzgussverfahrens hergestellt. Durch die herkömmliche runde Geometrie der Kugelkanäle 20-1 bis 20-6 kann es insbesondere in einem Übergangsbereich vom Vorlaufkanal 21 zur Welle 11, d. h. am Innenumfang des Käfigs 12 im Bereich der Kugelvorlaufkanäle 21, beim Spritzprozess zur Bildung von so genannten Schwimmhäuten kommen. Eine Korrektur des Spritzwerkzeugs im Hinblick auf derartige Qualitätsprobleme ist oft nur schwer möglich, da an dieser Stelle eine Anpassung radialer Schieber, welche die Kavitäten für die Kugelumläufe als auch den Durchgang für die Welle bilden, perfekt erfolgen muss. Dieses Problem wird weiterhin dadurch erschwert, dass an dem axialen Kern, d. h. an dem axialen Wellendurchgang, eine Entformungsschräge aus technischen und optischen Gründen kaum möglich ist. Weitere Kugelführungskanäle, die ebenfalls die o.g. Probleme nicht lösen, sind beispielsweise aus der DE 20 2012 101 437 U1, der FR 1 299 462 A, der US 6 550 969 B1, der US 5 221 145 A, der EP 1 783 385 A1 und der US 5 755 516 A bekannt. DE 20 2012 101 437 U1 offenbart einen Führungswagen einer Linearführung gemäß dem Oberbegriff des Anspruchs 1.

Vor diesem Hintergrund besteht eine Aufgabe der vorliegenden Erfindung darin, ein verbessertes Konzept für Kugelführungskanäle für kugelgelagerte Linearführungen bereitzustellen.

Die Aufgabe wird gelöst durch einen Führungswagen für eine kugelgelagerte Linearführung, wobei der Führungswagen einen Kugelführungskanal für endlos umlaufende Wälzkörper aufweist mit den Merkmalen des Patentanspruchs 1.

Es ist ein Grundgedanke der vorliegenden Erfindung, den Querschnitt des Kugelführungskanals mit einer anderen als der herkömmlichen runden Geometrie zu versehen. Statt die Kugeln, insbesondere im Kugelrückführungs- bzw. Rücklaufkanal, örtlich undefinierten Kontaktflächen auszusetzen, schlägt die vorliegende Erfindung vor, einen Kugelführungskanal derart auszubilden, dass für eine in dem Kugelführungskanal geführte bzw. umlaufende Kugel wenigstens drei vordefinierte und in Umfangsrichtung der Mantelfläche des Kugelführungskanals voneinander beabstandet angeordnete Kontaktflächen bereitgestellt werden, an denen die Kugel abrollen kann. In anderen Worten ausgedrückt wird also eine geometrische Form des Kugelführungskanals vorgesehen, sodass zwischen Kugel und Kanal- bzw. Käfigwand wenigstens ein Dreipunktkontakt erhalten wird.

Vermittels der wenigstens drei vordefinierten in die Mantelfläche des Kugelführungskanals eingeformten Kontaktflächen lässt sich eine axiale Verschiebung bzw. Führung der Wälzkörper bzw. Kugeln im Kugelführungskanal besser definieren als mit herkömmlichen runden Querschnitten. Gemäß Ausführungsbeispielen der vorliegenden Erfindung ist eine Maßhaltung nur an den vordefinierten Kontakt- bzw. Führungsflächen oder Führungslinien erforderlich. Dadurch ermöglichen Ausführungsbeispiele einen ruhigeren Lauf, Reibungsreduzierung und eine Geräuschreduzierung bei kugelgelagerten Linearführungen.

Um die wenigstens drei vordefinierten und in Umfangsrichtung voneinander beabstandeten Kontaktflächen in dem Kugelführungskanal bereitzustellen, kann dessen Mantelfläche in einer zur Umfangsrichtung der Mantelfläche senkrechten und zum Inneren des Kugelführungskanals weisenden radialen Richtung vorstehende und demgegenüber zurückversetzte Mantelflächenabschnitte aufweisen. Die wenigstens drei vordefinierten Kontaktflächen bzw. Kontaktflächenabschnitte können zumindest teilweise durch die vorstehenden und in Umfangsrichtung voneinander beabstandeten Mantelflächenabschnitte gebildet werden. Der Kugelführungskanal kann dabei ein Vorlaufkanal, insbesondere aber ein Rücklaufkanal sein.

Ausführungsbeispiele der vorliegenden Erfindung umfassen verschiedene Kugelführungskanalgeometrien, welche vorstehende und demgegenüber zurückversetzte Mantelflächenabschnitte bereitstellen. Gemäß Ausführungsbeispielen kann der Kugelführungskanal in einer Ebene senkrecht zu der axialen Erstreckung des Kugelführungskanals einen im Wesentlichen runden Querschnitt aufweisen, mit in Umfangsrichtung entlang der Mantelfläche in vordefinierten Abständen angeordneten und als Kontaktflächen dienenden radial nach innen weisenden Vorsprüngen. Bei solchen Ausführungsbeispielen sind die vorstehenden Mantelflächenabschnitte, d.h. die Vorsprünge, welche als Kontaktflächen dienen, beispielsweise konvex ausgebildet, wohingegen die übrigen zurückversetzten Mantelflächenabschnitte zylinderförmig bzw. konkav geformt sind.

Ein Kugelrückführungs- bzw. Rücklaufkanal kann gemäß Ausführungsbeispielen derart ausgebildet sein, dass wenigstens drei radial nach innen vorstehende und in Umfangsrichtung voneinander beabstandete Mantelflächenabschnitte des Kugelrückführungskanals während eines Betriebs der Linearführung als Kontaktflächen für eine in dem Kugelrückführungskanal zurückgeführte Kugel dienen. Nachdem es in einem Kugelrückführungskanal keine dezidierten Lauf- bzw. Gegenlaufflächen wie im Vorlaufkanal gibt, befinden sich hier entlang des Umfangs der Mantelfläche des Rücklaufkanals wenigstens drei vordefinierte Kontaktbereiche zur Führung der Kugeln.

Die Kontaktflächen bzw. Kontaktpunkte können gemäß Ausführungsbeispielen derart entlang des Umfangs der Mantelfläche des Kugelführungskanals angeordnet sein, sodass sich Oberflächennormalen durch die Kontaktpunkte zwischen einer umlaufenden Kugel und den wenigstens drei vordefinierten Kontaktflächen in einem Punkt der Querschnittsebene schneiden, der im Wesentlichen einem Mittelpunkt der in dem Kugelführungskanal geführten Kugel entspricht. Dadurch ergibt sich eine symmetrische Anordnung der Kontaktpunkte zwischen Kugel und Mantelfläche des Kugelführungskanals, wodurch insbesondere ein ruhiger Lauf und damit eine Geräuschreduzierung erreicht werden kann.

Zusätzlich oder alternativ kann zwischen wenigstens einem zurückgesetzten Mantelflächenabschnitt des Kugelführungskanals, welcher während eines Betriebs der Linearführung nicht als Kontaktfläche für eine in dem Kugelführungskanal geführte Kugel dient, und einer in dem Kugelführungskanal geführten Kugel ein Schmierstoffreservoir gebildet werden. Das bedeutet, dass Kavitäten des Kugelführungskanals, die nicht der Kugelführung dienen und Entformungsschrägen aufweisen können, zusätzlich als Schmierstoffreservoir genutzt werden können. Durch "versetzte Kavitäten" im Führungskanal entsteht quasi automatisch ein Schmierstoffreservoir. Dort wird sich der Schmierstoff (z.B. Fett) nach einer Initialschmierung oder Nachschmierung ablagern und während des Betriebes an rotierende (umlaufende) Kugeln abgegeben. Die Entformunsschrägen, die an diesen Flächen für das Begünstigen des Spritzgussverfahrens angebracht werden können, beeinflussen die Funktion des Schmierstoffreservoirs nicht.

Gemäß einem Aspekt der vorliegenden Erfindung wird ein Führungswagen für eine kugelgelagerte Linearführung bereitgestellt, wobei der Führungswagen, wie z. B. ein Profilschienenwagen oder eine zylindrische Kugelbuchse/Käfig, wenigstens einen erfindungsgemäßen Kugelführungskanal für endlos umlaufende Wälzkörper, wie z. B. Kugeln, aufweist. Ebenso stellen Ausführungsbeispiele der vorliegenden Erfindung selbstverständlich auch eine Linearführung mit einer Führungsschiene und einem Führungswagen bereit, wobei der Führungswagen vermittels eines erfindungsgemäßen Kugelführungskanals auf der Führungsschiene gelagert ist.

Dabei kann der Kugelführungskanal in einer Ebene senkrecht zu einer axialen Erstreckung der Linearführung bzw. des Kugelführungskanals einen mehreckigen Querschnitt, wie z. B. einen polygonalen Querschnitt, aufweisen. Das bedeutet, der Kugelführungskanal wird gemäß jenen Ausführungsbeispielen nicht rund, sondern beispielsweise fünf-, sechs- oder mehreckig ausgeführt.

Der Kugelführungskanal kann sowohl ein Vorlaufkanal als auch ein Rücklaufkanal sein. Bei einem (Kugelführungs-)Vorlaufkanal oder Tragkanal bildet eine Oberfläche der Führungsschiene bzw. Welle eine Laufbahn für in dem Vorlaufkanal geführte endlos umlaufende Kugeln. Der Führungswagen bzw. die Buchse umfasst dazu eine Gegenlaufbahn für die endlos umlaufenden Kugeln. Der Vorlaufkanal ist nun derart ausgebildet, dass bei fehlender Welle, d.h. im unbelasteten Zustand, wenigstens zwei radial nach innen vorstehende und in Umfangsrichtung voneinander beabstandete Mantelflächenabschnitte des Vorlaufkanals zusammen mit der Gegenlaufbahn als Kontaktflächen für eine in dem Vorlaufkanal geführten Kugel dienen. Das bedeutet also, dass durch eine als Spritzgussteil ausgebildete Buchse bzw. einen Käfig wenigstens zwei Kontakt- bzw. Führungsflächen gebildet werden, während von der in die Buchse bzw. in den Führungswagen eingeformten Gegenlaufbahn eine weitere Kontakt- bzw. Führungsfläche für die umlaufenden (und unbelasteten) Kugeln gebildet wird. Im belasteten Zustand rollen die Kugeln zwischen der Laufbahn auf der Welle und der Gegenlaufbahn in der Buchse ab. Ein Kontakt zwischen belasteter Kugel und den beiden Kontakt- bzw. Führungsflächen der Buchse besteht dabei nicht. Vielmehr ist im Lastzustand, d.h. bei vorhandener Welle, ein zusätzlicher Kontakt zwischen belasteter Kugel im Vorlaufkanal und den beiden Kontakt- bzw. Führungsflächen des Käfigs sogar unerwünscht.

Gegenüber den Kontaktflächen in radialer Richtung nach außen zurückversetzte Mantelflächenabschnitte des Kugelführungskanals, welche während des Betriebs der Linearführung nicht als eine der vordefinierten Kontaktflächen für eine im den Kugelführungskanal geführte Kugel dienen, werden gemäß Ausführungsbeispielen mit Entformungsschrägen versehen, um eine Entnahme eines mittels einem Spritzgussverfahren gefertigten Käfigs bzw. Führungswagens (z. B. Buchse) aus einem Spritzwerkzeug zu erleichtern.

Durch die erfindungsgemäße Formgebung des Kugelführungskanals kann die Buchse bzw. der Käfig im Bereich des Taschendurchgangs, d. h. im Übergangsbereich vom Käfig zur Welle hin geöffneten Vorlaufkanal, stabiler ausgeführt werden und damit ein ungewolltes Herausfallen der Kugeln bei unsachgemäßer Handhabung, Transport oder Montage erschweren. Ein radialer Querschnitt von axialer Richtung verlaufenden Haltestegen für die Kugeln in diesem Übergangsbereich kann gemäß Ausführungsbeispielen der vorliegenden Erfindung steifer ausgeführt werden als im Falle eines herkömmlichen runden Kugelführungskanals.

Durch die erfindungsgemäße Querschnittskontur kann eine Abrollbahn der im Kugelführungskanal geführten Kugeln von einer in Umfangsrichtung (tangentialer Richtung) weisender Spitze der axialen Haltestege weiter nach innen verlegt werden. Dadurch kann wiederum bei der Fertigung des Führungswagens bzw. der Buchse eine Bildung einer Schwimmhaut zwischen der Wellenbohrung und radialen Spritzwerkzeugschiebern nicht so schnell zu Funktionsstörungen des Linearlagers führen. Eine Werkzeugkorrektur kann somit vermieden werden.

An dem Führungswagen, d. h. insbesondere im Bereich der Kugelführungskanäle, können durch Ausführungsbeispiele der vorliegenden Erfindung Entformungsschrägen integriert werden, die einerseits optisch kaum auffallen und andererseits technisch auch keine Probleme verursachen. Es ist ebenso möglich, in dem Kugelkanal an mehreren zurückgesetzten Mantelflächenabschnitten Entformungsschrägen zu integrieren, wodurch ein Spritzgusswerkzeug robuster gebaut bzw. ein Kühlsystem des Spritzwerkzeugs optimiert werden kann.

Gemäß Ausführungsbeispielen der vorliegenden Erfindung werden die Kugeln in dem Kugelführungskanal vorzugsweise durch einen Dreipunktkontakt geführt. Durch diesen Dreipunktkontakt ist ein Verschieben der Kugeln in axialer Richtung, d. h. in axialer Erstreckungsrichtung des Führungswagens bzw. des Kugelführungskanals, besser zu definieren als bei herkömmlichen Linearführungen. Dadurch ist ein ruhigerer Lauf, Reibungsreduktion des gesamten Kugelumlaufs und eine Geräuschreduzierung möglich. Des Weiteren ist durch den definierten Dreipunktkontakt der Kugel im Kugelführungskanal eine Anbindung des Führungswagens bzw. der Buchse an ein sich axial anschließendes Bauteil, wie z. B. einen Umlenkbereich, konstruktiv und fertigungstechnisch einfacher zu optimieren. Die durch einen erfindungsgemäßen Kugelführungskanal gebildete Kavität kann auch weiterhin als Halterung bzw. Orientierungsgeometrie für eine Kugelkette genutzt werden.

Einige Ausführungsbeispiele der vorliegenden Erfindung werden nun nachfolgend bezugnehmend auf die beiliegenden Figuren näher erläutert. Es zeigen:
- Fig. 1: eine perspektivische Darstellung einer herkömmlichen Linearführung in Form eines Linearkugellagers;
- Fig. 2a: eine Querschnittsdarstellung des Linearkugellagers gemäß Fig. 1 senkrecht zu seiner Wellensachse;
- Fig. 2b: eine vergrößerte Darstellung eines herkömmlichen Kugelvorlaufkanals mit rundem Querschnitt;
- Fig. 2c: eine vergrößerte Darstellung eines herkömmlichen Kugelrücklaufkanals mit rundem Querschnitt;
- Fig. 3a: eine Querschnittsdarstellung einer Linearführung in Form eines Linearkugellagers mit Kugelführungskanälen gemäß einem Ausführungsbeispiel der vorliegenden Erfindung;
- Fig. 3b: eine vergrößerte Darstellung eines Kugelvorlaufkanals gemäß einem Ausführungsbeispiel der vorliegenden Erfindung;
- Fig. 3c: eine vergrößerte Querschnittsdarstellung eines Kugelkanals gemäß einem Ausführungsbeispiel der vorliegenden Erfindung;
- Fig. 4a: Querschnittsdarstellungen von verschiedenen zur Welle hin geöffneten Kugelrücklaufkanälen gemäß Ausführungsbeispielen der vorliegenden Erfindung;
- Fig. 4b: Querschnittsdarstellungen von möglichen Ausführungsbeispielen geschlossener Kugelrücklaufkanäle;
- Fig. 4c: eine Querschnittsdarstellung eines Ausführungsbeispiels für einen Kugelführungskanal mit einem Vier-Punkt-Kontakt; und
- Fig. 5: eine perspektivische Darstellung eines Käfigs bzw. einer Buchse für ein Linearkugellager, gemäß einem Ausführungsbeispiel der vorliegenden Erfindung, und einer Auswirkung von Entformungsschrägen in axialer Richtung auf eine Käfiginnenseite und eine Breite des Tachendurchhangs.

In der nachfolgenden exemplarischen Beschreibung einiger Ausführungsbeispiele beziehen sich gleiche Bezugszeichen auf gleiche, ähnliche oder funktional gleiche Bauteile.

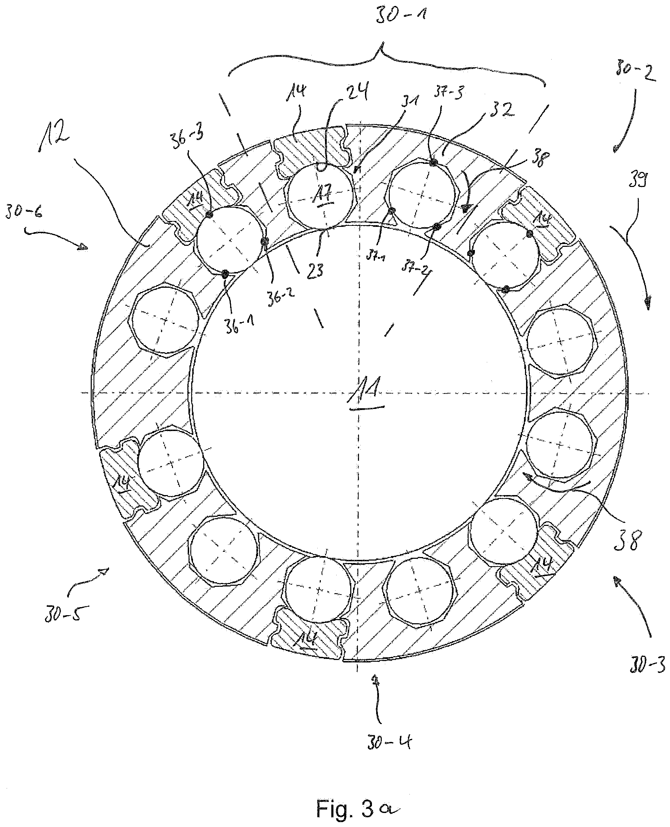

Die Fig. 3a zeigt eine Querschnittsdarstellung einer Linearführung gemäß einem möglichen Ausführungsbeispiel der vorliegenden Erfindung. Dabei ist die Linearführung lediglich exemplarisch als Linearkugellager ausgebildet, bei dem eine Buchse bzw. ein Käfig 12 eine Welle 11 zylinderförmig umgibt. Während die Welle 11 typischerweise aus Stahl gefertigt ist, handelt es sich bei der Buchse bzw. dem Käfig 12 zumeist um ein mittels einem Spritzgussverfahren hergestelltes Spritzgussteil, beispielsweise aus Kunststoff.

Die anhand der Fig. 3a dargestellte Linearführung unterscheidet sich von der eingangs anhand der Fig. 1 und 2 beschriebenen herkömmlichen Linearführung im Wesentlichen durch die geometrische Formgebung der in Umfangs- bzw. Tangentialrichtung 39 der Buchse 12 angeordneten und in axialer Richtung, d. h. in Richtung der Wellenachse, verlaufende Kugelführungskanäle 30-1 bis 30-6. Jeder der Kugelführungskanäle 30-1 bis 30-6 umfasst jeweils einen Kugelvorlaufkanal 31, sowie einen Kugelrücklaufkanal 32. Ein Kugelführungskanal bzw. ein Kugelvorlauf- oder Kugelrücklaufkanal wird jeweils durch eine in Umfangs- bzw. Tangentialrichtung 38 des Kugelführungskanals verlaufende Mantelfläche zumindest teilweise begrenzt. Das bedeutet, dass ein Kugelführungskanal entweder geschlossen oder teilweise offen ausgebildet sein kann.

Bei dem anhand der Fig. 3a gezeigten Ausführungsbeispiel handelt es sich sowohl bei den Kugelvorlaufkanälen 31 als auch bei den Kugelrücklaufkanälen 32 jeweils um teilweise (zur Welle 11 hin) geöffnete Kugelführungskanäle. Insbesondere die Kugelrücklaufkanäle 32 sind ausgebildet, sodass für eine in einem Kugelrücklaufkanal 32 während eines Betriebs der Linearführung umlaufende Kugel 17 wenigstens drei vordefinierte und in Umfangsrichtung 38 entlang der Mantelfläche voneinander beabstandete Kontaktflächen 37-1 bis 37-3 bereitgestellt werden, entlang denen die Kugel 17 abrollen bzw. geführt werden kann. Die Kugelvorlaufkanäle 31 sind ausgebildet, sodass für eine in dem Kugelvorlaufkanal 31 bei fehlender Welle gehaltene bzw. geführte Kugel 17 ebenfalls wenigstens drei vordefinierte und in Umfangsrichtung 38 entlang der Mantelfläche voneinander beabstandete Kontaktflächen 36-1 bis 36-3 bereitgestellt werden, entlang denen die Kugel 17 bei fehlender Welle 11 abrollen kann. Während des Betriebs mit Welle 11, also im belasteten Zustand, rollen die Kugeln 17 im Vorlaufkanal 31 allerdings lediglich zwischen der Welle 11 und Gegenlaufbahnstück 14 (Kontaktpunkt 36-3) ab.

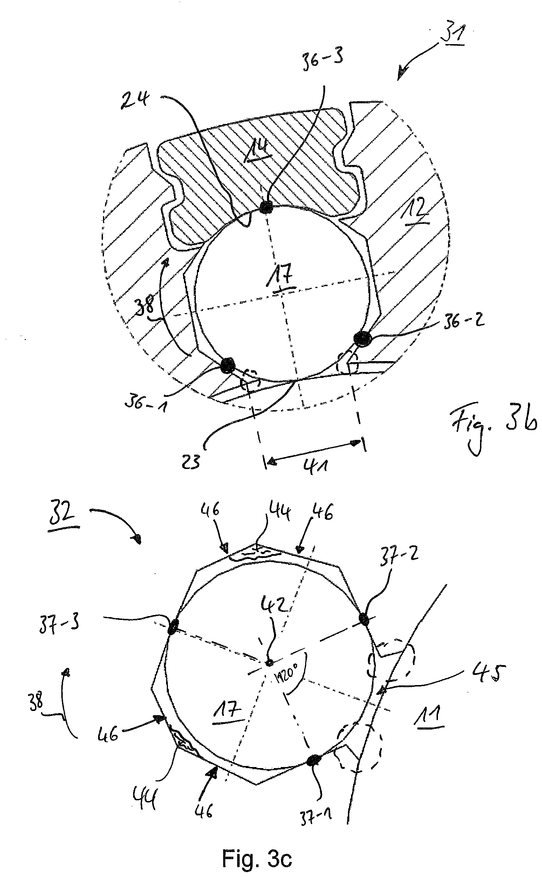

Die wenigstens drei Kontaktpunkte bzw. -flächenabschnitte 36-1 bis 36-3 bzw. 37-1 bis 37-3 können gemäß Ausführungsbeispielen der vorliegenden Erfindung dadurch gebildet werden, indem die Mantelfläche des Kugelführungskanals 31, 32 in einer zur Umfangsrichtung 38 des Kugelführungskanals senkrechten und zum Inneren des Kugelführungskanals 31, 32 weisenden radialen Richtung vorstehende und demgegenüber zurückversetzte Mantelflächenabschnitte aufweist, wobei die Kontaktflächen bzw. -bereiche 36-1 bis 36-3 bzw. 37-1 bis 37-3 durch vorstehende und in Umfangsrichtung des Kugelführungskanals voneinander beabstandete Mantelflächenabschnitte gebildet werden. Dies lässt sich insbesondere anhand der vergrößerten Darstellungen eines Kugelvorlaufkanals 31 und eines Kugelrücklaufkanals 32 der Fig. 3b, 3c nachvollziehen.

Die Fig. 3b zeigt eine vergrößerte Darstellung eines Kugelvorlaufkanals 31 gemäß einem Ausführungsbeispiel der vorliegenden Erfindung. Der Kugelvorlaufkanal 31 wird einerseits durch den Käfig 12 und andererseits durch die auf der Wellenoberfläche befindliche Laufbahn 23 und die durch das Gegenlaufbahnstück 14 bereitgestellte Gegenlaufbahn 24 begrenzt. Die durch den Käfig 12 gebildeten Mantelflächenabschnitte des Kugelvorlaufkanals 31 sind gemäß dem hier gezeigten Ausführungsbeispiel im Querschnitt abschnittsweise mehreckig bzw. polygonal ausgebildet. Der Kugelvorlaufkanal 31 weist also einen Querschnitt auf, der einem nach unten (zur Welle 11 hin) und/oder oben (zur Gegenlaufbahn 24 hin) geöffneten Polygon entspricht. In noch anderen Worten ausgedrückt kann der Kugelführungskanal 31 in einer Ebene senkrecht zu einer axialen Erstreckung des Kugelführungskanals 31 einen mehreckigen, insbesondere polygonalen, Querschnitt aufweisen. Beispielsweise kann es sich um einen achteckigen, d. h. oktogonalen, Querschnitt handeln. Durch den zumindest teilweise oder abschnittsweise polygonal ausgebildeten Kugelvorlaufkanal 31 werden an den mit den Bezugszeichen 36-1 bis 36-3 bezeichneten Punkten Kontaktflächen bzw. -bereiche gebildet, an denen die Kugel 17 zumindest in unbelastetem Zustand, d.h. bei nicht vorhandener Welle 11, abrollen kann. Dabei wird im Vorlaufkanal 31 der radial außen gelegene Kontaktbereich 36-3 vermittels der Gegenlaufbahn 24 bereitgestellt. Am radial innen gelegenen Bereich des Käfigs 12 hin zur Welle 11 befindet sich eine radial nach innen gerichtete Öffnung 41 des Kugelvorlaufkanals 31, welche auch als Taschendurchgang bezeichnet werden kann. Durch die im Querschnitt mehreckige Ausgestaltung des Kugelführungskanals 31 können die radial innen gelegenen, d.h. in Richtung Wellendurchgang weisenden Kontaktbereiche 36-1, 36-2 derart positioniert werden, dass der Kontakt zur Kugel 17 nicht, wie durch die gestrichelten Kreise dargestellt, an den Materialspitzen oder den Öffnungsendbereichen des Taschendurchgangs 41 stattfindet. Durch die mehreckige Querschnittskontur des Kugelführungskanals 31 kann also die Abrollbahn der Kugel 17 im Kanal 31 von den Materialspitzen am Taschendurchgang 41 nach radial außen verlegt werden, wodurch die Bildung einer Schwimmhaut zwischen einer radial innen liegenden Mantelfläche (Wellenbohrung) des zylinderförmigen Käfigs 12 und radialen Schiebern eines Spritzwerkzeugs nicht so schnell zu Funktionsstörungen des Linearlagers führen wird bzw. eine sofortige Werkzeugkorrektur nicht notwendig ist.

Bei dem Kugelvorlaufkanal 31 bildet eine Oberfläche der Welle 11 eine Laufbahn für die in den Kugelführungskanälen 31, 32 endlos umlaufende Kugeln 17, und der Käfig bzw. Führungswagen 12 bildet eine Gegenlaufbahn für die endlos umlaufenden Kugeln 17. Der Kugelführungskanal 31 kann gemäß der Fig. 3b also derart ausgebildet sein, dass wenigstens zwei radial nach innen vorstehende und in Umfangsrichtung 38 voneinander beabstandete Mantelflächenabschnitte 36-1, 36-2 des Kugelvorlaufkanals 31 ohne das Vorhandensein der Welle 11 zusammen mit der Gegenlaufbahn 24 als Kontaktflächen für eine in dem Kugelvorlaufkanal 31 zwischen Taschendurchgang 41 und Gegenlaufbahn 24 geführte Kugel 17 dienen.

Die Fig. 3c zeigt in vergrößerter Darstellung einen Kugelrücklaufkanal 32 gemäß einem Ausführungsbeispiel der vorliegenden Erfindung.

Der zu dem Kugelvorlaufkanal 31 korrespondierende Kugelrücklaufkanal 32 ist gemäß dem gezeigten Ausführungsbeispiel ebenfalls polygonal ausgebildet, insbesondere achteckig. Während die Kugeln 17 in dem Rückführungskanal 32 geführt werden, stehen die Kugeln 17 nicht unter Last. Das bedeutet, dass sie nicht zwischen einer Lauffläche auf der Führungsschiene bzw. Welle 11 und einer Gegenlauffläche in der Buchse 12 abrollen, sondern lediglich, ohne belastet zu sein, in dem Kugelrückführungskanal 32 entlang der axialen Erstreckung des Führungswagens bzw. der Buchse 12 zurückgeführt werden. Auch hier ergeben sich durch den mehreckigen Querschnitt drei vordefinierte und in Umfangsrichtung voneinander beabstandete Kontaktbereiche 37-1 bis 37-3 zwischen Kugel 17 und der Mantelfläche des Kugelrücklaufkanals 32. Die Kontaktbereiche 37-1 bis 37-3 gehören zu radial nach innen vorstehenden Mantelflächenabschnitten. Demgegenüber sind die restlichen Mantelflächenabschnitte in radialer Richtung (nach außen) zurückversetzt, wodurch sie nicht in unmittelbaren Kontakt mit der Kugel 17 treten können. Durch den in Fig. 3c dargestellten Dreipunktkontakt ergibt sich eine gegenüber dem Stand der Technik verbesserte axiale Führung der umlaufenden Kugeln 17.

Der Kugelführungskanal 32 kann also derart ausgebildet sein, dass wenigstens drei radial nach innen vorstehende und in Umfangsrichtung voneinander beabstandete Mantelflächenabschnitte 37-1 bis 37-3 des Kugelführungskanals 32 während eines Betriebs der Linearführung als Kontaktflächen bzw. -bereiche für eine in dem Kugelführungskanal geführte Kugel 17 dienen.

Der gezeigte Rückführungskanal 32 ist lediglich beispielhaft als zur Welle 11 hin offener Kugelkanal ausgebildet, was bedeutet, dass er in radialer Richtung nach innen, d. h. zur Welle 11 hin gerichtet, nicht abgeschlossen ausgebildet ist. Durch die gegenüber einem herkömmlichen runden Querschnitt in radialer Richtung nach außen verlegten Kontaktpunkte 37-1, 37-2 ist eine Schwimmhautbildung bei der Fertigung des Käfigs 12 im Durchgangsbereich 45 zwischen Rücklaufkanal 32 und Welle 11 weniger kritisch.

Geometrisch können die Kontaktpunkte 37-1 bis 37-3 derart in Umfangsrichtung 38 entlang der Mantelfläche des Kugelführungskanals 32 angeordnet sein, sodass Oberflächennormalen durch die Kontaktpunkte 37-1 bis 37-3 in einem Punkt 42 der Querschnittsebene schneiden, der im Wesentlichen einem Mittelpunkt der in dem Kugelführungskanal 32 geführten Kugel 17 entspricht. In dem anhand der Fig. 3c gezeigten Ausführungsbeispiel schließen die Oberflächennormalen jeweils einen Winkel von im Wesentlichen 120° ein. Bei im Allgemeinen n Kontaktpunkten 37-1 bis 37-n kann ein Winkel zwischen zwei benachbarten Oberflächennormalen von im Wesentlichen (d.h. unter Berücksichtigung von Fertigungstoleranzen) 360°/n vorteilhaft sein.

An den in Fig. 3c mit den Pfeilen 46 angedeuteten und gegenüber den Kontaktflächen zurückversetzten Mantelflächenabschnitten, die nicht in Kontakt zu der Kugel 17 stehen, können gemäß manchen Ausführungsbeispielen Entformungsschrägen in axialer Richtung für die Spritzgussfertigung vorgesehen werden. Das heißt, in Richtung der Buchsen- oder Käfigrotationsachse können die mit den Pfeilen 46 markierten zurückversetzten Mantelflächenabschnitte leicht schräg ausgebildet sein. Das heißt, wenigstens ein Mantelflächenabschnitt des Kugelführungskanals 32, welcher während des Betriebs der Linearführung nicht als Kontaktfläche oder Kontaktbereich die in dem Kugelführungskanal 32 geführte Kugel 17 dient, kann eine Entformungsschräge umfassen, um eine Entnahme des als Spritzgussteil ausgebildeten Käfigs 12 aus einem Spritzwerkzeug zu erleichtern. Des Weiteren können Zwischenräume zwischen den zurückversetzten, nicht-führenden Mantelflächenabschnitten 46 des Kugelführungskanals 32 und der Kugel 17 als Schmierstoffreservoir dienen, wie dies durch das Bezugszeichen 44 angedeutet ist. In anderen Worten ausgedrückt können die nicht zur Kugelführung dienenden Kavitäten des Kanals 32 also zusätzlich als Schmierstoffreservoir genutzt werden und zusätzlich oder alternativ mit Entformungsschrägen ausgebildet sein.

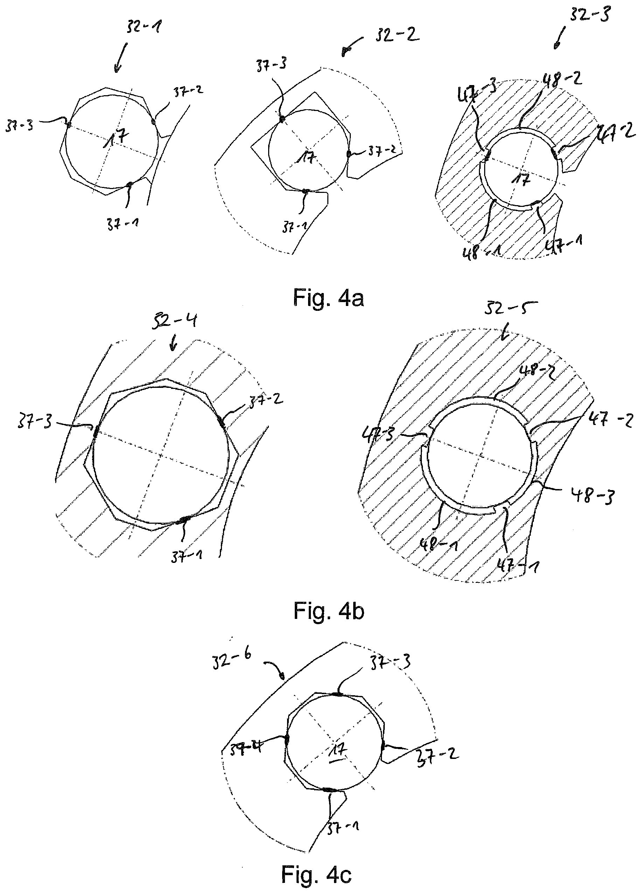

Ausführungsbeispiele von Kugelführungskanälen gemäß der vorliegenden Erfindung sind nicht auf die bisher beschriebenen Beispiele beschränkt. In der Fig. 4a sind verschiedene geometrische Querschnittsformen für offene Kugelrücklaufkanäle dargestellt.

Bei dem links gezeigten Rückführungskanal 32-1 handelt es sich um das bereits weiter oben anhand der Fig. 3a-c beschriebene oktogonale Ausführungsbeispiel mit drei Kontaktpunkten 37-1 bis 37-3. Bei dem mittig gezeigten Ausführungsbeispiel handelt es sich um eine hexagonale, d. h. sechseckige, Querschnittsform des Rückführungskanals. Auch dieser ist beispielhaft zur Welle (nicht gezeigt) hin offen ausgebildet, d. h. ein radial innen gelegenen Mantelflächenabschnitt des Kugelführungskanals 32-2 fehlt. Die in Fig. 4a rechts dargestellte Ausführungsform 32-3 weist in einer Ebene senkrecht zu der axialen Erstreckung des Rückführungskanals einen im Wesentlichen runden Querschnitt auf, mit in Umfangsrichtung entlang der Mantelfläche des Kanals 32-3 in vordefinierten Abständen angeordneten und als Kontaktflächen dienenden radial nach innen weisenden Vorsprüngen 47-1 bis 47-3. Die gegenüber den Vorsprüngen 47-1 bis 47-3 radial zurückversetzten Mantelflächenabschnitte 48-1, 48-2 sind in ihrem Querschnitt konkav abgerundet ausgebildet - ähnlich einem herkömmlichen Kugelführungskanal. Obwohl die in Richtung Kugelkanalmittelpunkt weisenden Vorsprünge 47-1 bis 47-3 gemäß der Fig. 4a (rechts) eckig dargestellt sind, können gemäß anderen Ausführungsbeispielen diese radial nach innen weisenden Vorsprünge 47-1 bis 47-3 beispielsweise auch konvex abgerundet ausgebildet sein, um Kontaktflächen für die im Inneren des Kanals 32-3 geführte Kugel 17 zu bilden.

Zudem sei erwähnt, dass Ausführungsbeispiele auch Kombinationen zulassen, bei denen eine Mantelfläche teilweise abgerundet und teilweise polygonal (d.h. eckig, flach) ausgebildet ist.

Bei sämtlichen Ausführungsformen können die sich durch die Vorsprünge und die demgegenüber zurückversetzten Mantelflächenabschnitte ergebenden freien Räume um die Kugel 17 herum (d.h., Spalt zwischen Kugel 17 und zurückversetztem Mantelflächenabschnitt) als Schmierstoffreservoir genutzt werden.

Nachdem anhand der Fig. 4a einige mögliche Ausführungsformen für offene Kugelkanäle für den Kugelrücklauf erläutert wurden, zeigt die Fig. 4b zwei mögliche Ausführungsbeispiele für geschlossene Kugelrücklaufkanäle 32-4, 32-5.

Bei dem Kugelrücklaufkanal 32-4 (links) handelt es sich um einen oktogonalen geschlossenen Kugelkanal mit drei in radialer Richtung (d. h. zum Kugelinneren weisend) vorstehenden und fünf demgegenüber zurückversetzten Mantelflächenabschnitten. Der Kugelführungskanal 32-5 korrespondiert zu dem oben beschriebenen offenen Kugelführungskanal 32-3. Der geschlossene Kugelführungskanal 32-5 weist also bei einem sonst im Wesentlichen runden Querschnitt mit an seiner Mantelfläche in Umfangsrichtung in vordefinierten Abständen angeordneten und als Kontaktflächen dienenden radialen Vorsprünge 47-1 bis 47-3 auf. Die verbleibenden Mantelflächenabschnitte 48-1 bis 48-3 sind demgegenüber zurückversetzt und können, wie oben bereits beschriebene wurde, als Grundlage für ein Schmiermitteldepot verwendet werden.

Je nachdem, wie viele radial nach innen vorstehende und in Umfangsrichtung voneinander beabstandet angeordnete vorstehende Mantelflächenabschnitte vorgesehen werden, können sich auch mehr als drei Kontaktflächen bzw. -bereiche zur Führung der Kugeln 17 innerhalb eines Kugelführungskanals realisieren lassen. Dazu zeigt die Fig. 4c ein Ausführungsbeispiel eines zur Welle hin offenen Kugelkanals 32-6, welcher derart ausgebildet ist, dass für eine in dem Kugelführungskanal 32-6 während eines Betriebs der Linearführung umlaufende Kugel 17 vier vordefinierte und in Umfangsrichtung entlang der Mantelfläche voneinander beabstandet angeordnete Kontaktflächen 37-1 bis 37-4 bereitgestellt werden, an denen die Kugel 17 abrollen kann.

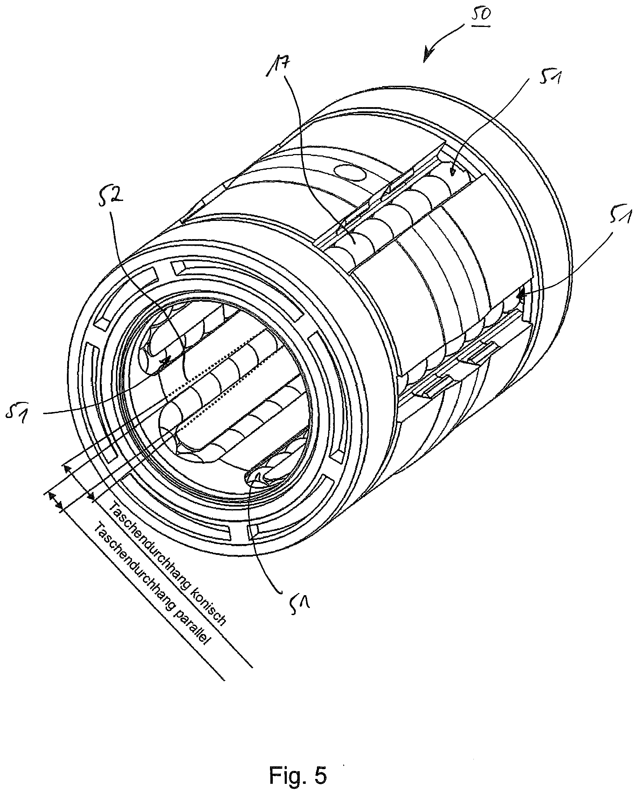

Die Fig. 5 zeigt einen auf einer (nicht dargestellten) Führungsschiene anordenbaren Führungswagen bzw. Käfig 50, d.h. einen Führungswagen bzw. Käfig, der auf einer Führungsschiene bzw. Welle angeordnet werden kann, welcher eine Mehrzahl von Kugelführungskanälen 51 aufweist, die jeweils einen mehreckigen Querschnitt aufweisen, sodass für in den Führungskanälen 51 umlaufende Kugeln 17 zur Führung wenigstens drei vordefinierte und in Umfangsrichtung voneinander beabstandete Kontaktflächen bereitgestellt werden, an denen die Kugeln 17 abrollen können.

Durch Kugelführungskanäle gemäß Ausführungsbeispielen der vorliegenden Erfindung können konische Taschendurchgänge aufgrund von Entformungsschrägen, wie sie in der Fig. 5 durch die gepunkteten Linien 52 angedeutet sind, vermieden werden. Mit einem gemäß Ausführungsbeispielen der vorliegenden Erfindung modifizierten Kugelführungskanal mit vordefinierten Kontaktpunkten kann dieser Nachteil beseitigt bzw. verringert werden, da Entformungsschrägen an den nicht mit der Kugel 17 in Kontakt stehenden Mantelflächenabschnitten eingearbeitet werden können. Bei herkömmlichen Ausführungen entsteht also eine konische Form der Tasche (Öffnungslangloch des Kugelkanals). Durch die gemäß Ausführungsbeispielen vorgeschlagene Form des Kugelkanals kann die Form der Tasche über gesamte Länge parallel bleiben.

Ausführungsbeispiele betreffen einen Kugelführungskanal 30; 31; 32; 51 nach zumindest einem der beschriebenen Ausführungsbeispiele, wobei der Kugelführungskanal in einer Ebene senkrecht zu einer axialen Erstreckung des Kugelführungskanals einen im Wesentlichen runden Querschnitt, mit in Umfangsrichtung 38 in vordefinierten Abständen angeordneten und als Kontaktflächen dienenden radialen Vorsprüngen 47, aufweist.

Die in der vorstehenden Beschreibung, den nachfolgenden Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte im Zusammenhang mit einer Vorrichtung bzw. einer Linearführung beschrieben wurden, versteht es sich, dass diese Aspekte auch eine Beschreibung eines entsprechenden Verfahrens, insbesondere eines Herstellungsverfahrens oder eines Verfahrens zum Betreiben einer Linearführung, darstellen, sodass ein Block oder ein Bauelement einer Vorrichtung auch als ein entsprechender Verfahrensschritt oder als ein Merkmal eines Verfahrensschritts, beispielsweise zur Herstellung oder zum Betreiben einer Linearführung, zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

### Bezugszeichenliste

- 10: Herkömmliche Linearführung
- 11: Welle
- 12: Führungswagen, Buchse, Käfig
- 13: Wälzkörperreihe
- 14: Gegenlaufbahneinsatz, -stück
- 15: Umlenkbereich
- 16: Schlussring
- 17: Wälzkörper
- 19: Dichtung
- 20: Kugelführungskanal inkl. Kugelvorlauf und Kugelrücklauf
- 21: herkömmlicher Kugelvorlaufkanal
- 22: herkömmlicher Kugelrücklaufkanal
- 23: Wälzkörperlaufbahn auf Welle
- 24: Gegenlaufbahn
- 26: Kontaktpunkt in herkömmlichem Kugelvorlaufkanal
- 27: Kontaktpunkt in herkömmlichem Kugelrücklaufkanal
- 30: Kugelführungskanal gemäß einem Ausführungsbeispiel
- 31: Kugelvorlaufkanal gemäß einem Ausführungsbeispiel
- 32: Kugelrücklaufkanal gemäß einem Ausführungsbeispiel
- 36: Kontaktpunkte in erfindungsgemäßem Kugelvorlaufkanal (unbelastet)
- 37: Kontaktpunkte in erfindungsgemäßem Kugelrücklaufkanal
- 38: Umfangsrichtung der Mantelfläche des Kugelführungskanals
- 39: Umfangsrichtung des zylinderförmigen Käfigs bzw. Buchse
- 41: Taschendurchgang
- 42: Kugelmittelpunkt
- 44: Schmiermitteldepot
- 45: Durchgangsbereich zwischen Rücklaufkanal und Welle
- 46: Zurückversetzte Mantelflächenabschnitte
- 47: Vorgesetzter bzw. vorstehender Mantelflächenabschnitt
- 48: Zurückversetzter Mantelflächenabschnitt
- 50: Führungswagen, Buchse, Käfig gemäß einem Ausführungsbeispiel
- 51: Kugelführungskanal gemäß einem Ausführungsbeispiel
- 52: Entformungsschräge

## Patentansprüche

1. Ein Führungswagen (12; 50) für eine kugelgelagerte Linearführung, wobei der Führungswagen (12; 50) einen Kugelführungskanal (30; 31; 32; 51) für endlos umlaufende Wälzkörper (17) aufweist und linear beweglich auf einer Führungsschiene (11) einer kugelgelagerten Linearführung anordenbar ist (12; 50), wobei eine Oberfläche der anordenbaren Führungsschiene (11) eine Laufbahn (23) für in dem Kugelführungskanal endlos umlaufende Kugeln (17) bildet,
wobei der Kugelführungskanal (30; 31; 32; 51) durch eine Mantelfläche in Umfangsrichtung (38) zumindest teilweise begrenzt wird,
wobei der Kugelführungskanal (30; 31; 32; 51) in einer Ebene senkrecht zu einer axialen Erstreckung des Kugelführungskanals (30; 31; 32; 51) einen polygonalen Querschnitt aufweist,
und wobei der Kugelführungskanal (30; 31; 32; 51) derart ausgebildet ist, dass für eine in dem Kugelführungskanal (30; 31; 32; 51) umlaufende Kugel (17) wenigstens drei vordefinierte und in Umfangsrichtung des Kugelführungskanals (30; 31; 32; 51) voneinander beabstandete Kontaktflächen (36; 37) bereitgestellt werden, an denen die Kugel (17) abrollen kann,
**dadurch gekennzeichnet, dass**
zwischen der Kugel (17) und der Mantelfläche des Kugelführungskanals (30; 31; 32; 51) in einem unbelasteten Zustand wenigstens ein Dreipunktekontakt erhalten wird, wobei der Führungswagen (12; 50) eine Gegenlaufbahn (24) zu der Laufbahn (23) für die endlos umlaufende Kugeln (17) umfasst, wobei der Kugelführungskanal (30; 31; 32; 51) derart ausgebildet ist, dass im unbelasteten Zustand wenigstens zwei radial nach innen vorstehende und in Umfangsrichtung voneinander beabstandete, polygonal ausgebildete Mantelflächenabschnitte (36; 37) des Kugelführungskanals (30; 31; 32; 51) zusammen mit der Gegenlaufbahn (24) als Kontaktflächen (36; 37) für eine in dem Kugelführungskanal (30; 31; 32; 51) geführte Kugel (17) dienen,
wobei wenigstens ein Mantelflächenabschnitt (46; 48) des Kugelführungskanals, welcher während eines Betriebs der Linearführung nicht als Kontaktfläche für eine in dem Kugelführungskanal (30; 31; 32; 51) geführte Kugel (17) dient, eine Entformungsschräge umfasst, um eine Entnahme des mittels einem Spritzgussverfahren gefertigten Führungswagens aus einem Spritzwerkzeug zu erleichtern.

2. Der Führungswagen (12; 50) nach Anspruch 1, wobei die Mantelfläche in einer zur Umfangsrichtung (38) senkrechten und zu einem Innern des Kugelführungskanals (30; 31; 32; 51) weisenden radialen Richtung vorstehende und demgegenüber zurückversetzte Mantelflächenabschnitte (46; 48) aufweist, wobei die zurückversetzten Mantelflächenabschnitte (46; 48) nicht in unmittelbaren Kontakt mit der Kugel (17) treten können und die Kontaktflächen (36; 37) zumindest teilweise durch vorstehende und in Umfangsrichtung (38) voneinander beabstandet angeordneten Mantelflächenabschnitte gebildet werden.

3. Der Führungswagen (12; 50) nach einem der vorhergehenden Ansprüche, wobei die Führungsschiene als Welle (11) ausgebildet ist, die der Führungswagen (12) zylinderförmig umgibt.

4. Der Führungswagen (12; 50) nach einem der vorhergehenden Ansprüche, wobei der Kugelführungskanal (31, 32) eine Öffnung (41, 45) aufweist, wobei Kontaktbereiche (36-1, 36-2, 37-1, 37-2) derart positioniert sind, dass der Kontakt zur Kugel (17) nicht an Materialspitzen oder den Öffnungsendbereichen der Öffnung (41, 45) stattfindet, sondern eine Abrollbahn der Kugel (17) im Kugelführungskanal (31, 32) von den Materialspitzen an der Öffnung (41) nach radial außen verlegt ist.

5. Der Führungswagen (12; 50) nach einem der vorhergehenden Ansprüche, wobei der Kugelführungskanal einen Kugelrücklaufkanal (32) umfasst, welcher derart ausgebildet ist, dass wenigstens drei radial nach innen vorstehende und in Umfangsrichtung voneinander beabstandete Mantelflächenabschnitte (36; 37) des Kugelführungskanals als Kontaktflächen (36; 37) für eine in dem Kugelführungskanal geführte Kugel (17) dienen.

6. Der Führungswagen (12; 50) nach einem der vorhergehenden Ansprüche, wobei sich Oberflächennormalen durch Kontaktpunkte zwischen der Kugel (17) und den wenigstens drei vordefinierten Kontaktflächen (36; 37) in einem Punkt (42) der Querschnittsebene schneiden, der im Wesentlichen einem Mittelpunkt der in dem Kugelführungskanal (30; 31; 32; 51) geführten Kugel (17) entspricht.

7. Der Führungswagen (12; 50) nach einem der vorhergehenden Ansprüche, wobei zwischen wenigstens einem Mantelflächenabschnitt (46; 48) des Kugelführungskanals, welcher während eines Betriebs der Linearführung nicht als Kontaktfläche für eine in dem Kugelführungskanal (30; 31; 32; 51) geführte Kugel (17) dient, und der Kugel ein Schmierstoffreservoir (44) gebildet wird.

## Claims

1. Guide carriage (12; 50) for a ball bearing mounted linear guide, wherein the guide carriage (12; 50) has a ball guide channel (30; 31; 32; 51) for endless circulating rolling bodies (17) and can be arranged linearly movable on a guiding rail (11) of a ball bearing mounted linear guide, wherein a surface of the guiding rail (11) that can be arranged forms a raceway (23) for balls (17) endless circulating in the ball guide channel, wherein the ball guide channel (30; 31; 32; 51) is at least partially limited by a lateral surface in circumferential direction (38), wherein the ball guide channel (30; 31; 32; 51) has a polygonal cross-section in a plane perpendicular to an axial extension of the ball guide channel (30; 31; 32; 51) and wherein the ball guide channel (30; 31; 32; 51) is designed in such a manner that at least three predefined contact surfaces (36; 37) spaced from each other in circumferential direction of the ball guide channel (30; 31; 32; 51) are made available for a ball (17) circulating in the ball guide channel (30; 31; 32; 51), contact surfaces on which the ball (17) can roll along,
**characterized in that**
at least one three point contact is obtained between the ball (17) and the lateral surface of the ball guide channel (30; 31; 32; 51) in an unloaded condition, wherein the guide carriage (12; 50) comprises a mating raceway (24) to the raceway (23) for the endless circulating balls (17), wherein the ball guide channel (30; 31; 32; 51) is designed in such a manner that in the unloaded condition at least two radially inwards protruding lateral surface sections (36; 37), with a polygonal design, of the ball guide channel (30 ; 31 ; 32 ; 51) that are spaced from each other in circumferential direction serve, together with the mating raceway (24), as contact surfaces (36; 37) for a ball (17) guided in the ball guide channel (30 ; 31 ; 32 ; 51), wherein at least one lateral surface section (46; 48) of the ball guide channel that does not serve during operation of the linear guide, as a contact surface for a ball (17) guided in the ball guide channel (30 ; 31 ; 32 ; 51) comprises a demoulding bevel in order to facilitate a removal of the guide carriage produced by means of an injection moulding method out of an injection tool.

2. Guide carriage (12; 50) according to claim 1, wherein the lateral surface has lateral surface sections (46; 48) protruding in a radial direction perpendicular to the circumferential direction (38), turned to an inside of the ball guide channel (30; 31; 32; 51) and set back thereto, wherein the set back lateral surface sections (46; 48) cannot come into direct contact with the ball (17) and the contact surfaces (36; 37) are formed at least partially by protruding lateral surface sections that are arranged spaced from each other in circumferential direction (38).

3. Guide carriage (12; 50) according to one of the preceding claims, wherein the guiding rail is designed as a shaft (11) that cylindrically surrounds the guide carriage (12).

4. Guide carriage (12; 50) according to one of the preceding claims, wherein the ball guide channel (31, 32) has an opening (41, 45), wherein contact areas (36-1, 36-2, 37-1, 37-2) are positioned in such a manner that the contact to the ball (17) does not take place on material tips or on the opening end areas of the opening (41, 45), but that a rolling path of the ball (17) is laid radially outwards in the ball guide channel (31, 32) from the material tips on the opening (41).

5. Guide carriage (12; 50) according to one of the preceding claims, wherein the ball guide channel comprises a ball return channel (32) that is designed in such a manner that at least three lateral surface sections (36; 37) of the ball guide channel, protruding radially inwards and spaced from each other in circumferential direction, serve as contact surfaces (36; 37) for a ball (17) guided in the ball guide channel.

6. Guide carriage (12; 50) according to one of the preceding claims, wherein surface normals intersect by contact points between the ball (17) and the at least three predefined contact surfaces (36; 37) in a point (42) of the cross-section plane that substantially corresponds to a central point of the ball (17) guided in the ball guide channel (30; 31; 32; 51).

7. Guide carriage (12; 50) according to one of the preceding claims, wherein a lubricant tank (44) is formed between at least one lateral surface section (46; 48) of the ball guide channel that does not serve as a contact surface for a ball (17) guided in the ball guide channel (30; 31; 32; 51) during operation of the linear guide and the ball.

## Revendications

1. Chariot de guidage (12 ; 50) pour un guidage linéaire monté sur roulement à billes, cependant que le chariot de guidage (12 ; 50) présente un canal de guidage à billes (30 ; 31 ; 32 ; 51) pour des organes roulants circulant sans fin (17) et peut être placé mobile linéairement sur un rail de guidage (11) d'un guidage linéaire monté sur roulement à billes (12 ; 50), cependant qu'une surface du rail de guidage qui peut être placé (11) forme un chemin de roulement (23) pour des billes (17) circulant sans fin dans le canal de guidage à billes, cependant que le canal de guidage à billes (30 ; 31 ; 32 ; 51) est délimité au moins partiellement par une surface enveloppante dans le sens de la circonférence (38), cependant que le canal de guidage à billes (30 ; 31 ; 32 ; 51) présente une section transversale polygonale dans un plan perpendiculaire à une extension axiale du canal de guidage à billes (30 ; 31 ; 32 ; 51) et cependant que le canal de guidage à billes (30 ; 31 ; 32 ; 51) est configuré de telle manière que pour une bille (17) circulant dans le canal de guidage à billes (30 ; 31 ; 32 ; 51) au moins trois surfaces de contact (36 ; 37), prédéfinies et espacées l'une de l'autre dans le sens de la circonférence du canal de guidage à billes (30 ; 31 ; 32 ; 51) sont mises à disposition, surfaces sur lesquelles la bille (17) peut rouler,
**caractérisé en ce qu'**au moins un contact en trois points est obtenu entre la bille (17) et la surface enveloppante du canal de guidage à billes (30 ; 31 ; 32 ; 51) dans un état non sollicité, le chariot de guidage (12 ; 50) comprenant un chemin de roulement antagoniste (24) par rapport au chemin de roulement (23) pour les billes circulant sans fin (17), le canal de guidage à billes (30 ; 31 ; 32 ; 51) étant configuré de telle manière qu'à l'état non sollicité au moins deux sections de surface enveloppante (36 ; 37) du canal de guidage à billes (30 ; 31 ; 32 ; 51), de configuration polygonale, faisant saillie dans le sens radial vers l'intérieur et espacées l'une de l'autre dans le sens de la circonférence, servent, avec le chemin de roulement antagoniste (24), de surfaces de contact (36 ; 37) pour une bille (17) guidée dans le canal de guidage à billes (30 ; 31 ; 32 ; 51), cependant qu'au moins une section de surface enveloppante (46 ; 48) du canal de guidage à billes qui ne sert pas, pendant un fonctionnement du guidage linéaire, de surface de contact pour une bille (17) guidée dans le canal de guidage à billes (30 ; 31 ; 32 ; 51), comprend un chanfrein de démoulage pour faciliter un prélèvement du chariot de guidage, fabriqué au moyen d'un procédé de moulage par injection, d'un outil d'injection.

2. Chariot de guidage (12 ; 50) selon la revendication 1, la surface enveloppante présentant des sections de surface enveloppante (46 ; 48) faisant saillie dans un sens perpendiculaire au sens de la circonférence (38) et radial tourné vers un intérieur du canal de guidage à billes (30 ; 31 ; 32 ; 51) et en retrait par rapport à celui-ci, cependant que les sections de surface enveloppante en retrait (46 ; 48) ne peuvent pas entrer en contact direct avec la bille (17) et les surfaces de contact (36 ; 37) sont formées au moins partiellement par des sections de surface enveloppantes en saillie, placées espacées l'une de l'autre dans le sens de la circonférence (38).

3. Chariot de guidage (12 ; 50) selon l'une des revendications précédentes, le rail de guidage étant configuré comme un arbre (11) qui entoure le chariot de guidage (12) en forme de cylindre.

4. Chariot de guidage (12 ; 50) selon l'une des revendications précédentes, le canal de guidage à billes (31, 32) présentant une ouverture (41, 45), des zones de contact (36-1, 36-2, 37-1, 37-2) étant positionnées de telle manière que le contact avec la bille (17) ne se fait pas aux pointes de matériau ou aux zones terminales d'ouverture de l'ouverture (41, 45) mais au contraire qu'une voie de roulement de la bille (17) est posée dans le canal de guidage à billes (31, 32) radialement vers l'extérieur en partant des pointes de matériau sur l'ouverture (41).

5. Chariot de guidage (12 ; 50) selon l'une des revendications précédentes, le canal de guidage à billes comprenant un canal de retour de billes (32) qui est configuré de telle manière qu'au moins trois sections de surface enveloppante (36 ; 37) du canal de guidage à billes faisant saillie radialement vers l'intérieur et espacées l'une de l'autre dans le sens de la circonférence servent de surfaces de contact (36 ; 37) pour une bille (17) guidée dans le canal de guidage à billes.

6. Chariot de guidage (12 ; 50) selon l'une des revendications précédentes, des normales à la surface se coupant par des points de contact entre la bille (17) et les au moins trois surfaces de contact prédéfinies (36 ; 37) en un point (42) du plan de section transversale qui correspond substantiellement à un point central de la bille (17) guidée dans le canal de guidage à billes (30 ; 31 ; 32 ; 51).

7. Chariot de guidage (12 ; 50) selon l'une des revendications précédentes, cependant qu'un réservoir de lubrifiant (44) est formé entre au moins une section de surface enveloppante (46 ; 48) du canal de guidage à billes qui ne sert pas, pendant un fonctionnement du guidage linéaire, de surface de contact pour une bille (17) guidée dans le canal de guidage à billes (30 ; 31 ; 32 ; 51).
